(19) Europäisches Patentamt

European Patent Office

Office européen des brevets

(11) Veröffentlichungsnummer: **0 316 505 B1**

(12) **EUROPÄISCHE PATENTSCHRIFT**

(45) Veröffentlichungstag der Patentschrift: **18.03.92**

(21) Anmeldenummer: **88100465.9**

(22) Anmeldetag: **14.01.88**

(51) Int. Cl.⁵: **B29B 13/02**, B05C 5/04

(54) **Vorrichtung zum Verflüssigen eines hochpolymeren, thermoplastischen Werkstoffes.**

(30) Priorität: **13.11.87 DE 3738637**

(43) Veröffentlichungstag der Anmeldung:
**24.05.89 Patentblatt 89/21**

(45) Bekanntmachung des Hinweises auf die
Patenterteilung:
**18.03.92 Patentblatt 92/12**

(84) Benannte Vertragsstaaten:
**AT BE CH DE ES FR GB GR IT LI LU NL SE**

(56) Entgegenhaltungen:
**DD-A- 204 217**
**DE-A- 3 517 379**
**US-A- 2 253 176**

(73) Patentinhaber: **NORDSON CORPORATION**
**28601 Clemens Road**
**Westlake Ohio 44145-1148(US)**

(72) Erfinder: **Claassen, Henning J.**
**Industriegebiet Hafen**
**W-2120 Lüneburg(DE)**

(74) Vertreter: **Schwabe - Sandmair - Marx**
**Stuntzstrasse 16**
**W-8000 München 80(DE)**

# Beschreibung

Die Erfindung betrifft eine Vorrichtung zum Verflüssigen eines hochpolymeren, thermoplastischen Werkstoffes, insbesondere eines Schmelzklebers auf der Basis von Polyurethan der im Oberbegriff des Anspruchs 1 angegebenen Gattung.

Schlecht fließende, hochviskose, thermoplastische, hochpolymere Werkstoffe, nämlich hochviskose Dichtungsmassen, Buthylen sowie Haftschmelzkleber insbesondere Schmelzkleber auf der Basis von Polyurethan, können in sogenannten "Faßschmelzern" verflüssigt werden, also Heizeinrichtungen, die in den geöffneten Transportbehälter für einen solchen thermoplastischen Werkstoff eingeführt werden und die hochviskose Masse erwärmen, so daß sie fließfähig wird und nach unten aus dem Transportbehälter herausläuft.

In einem solchen Faßschmelzer lassen sich jedoch keine thermoplastischen Werkstoffe verarbeiten, die sehr empfindlich auf den in der Luft vorhandenen Sauerstoff reagieren und insbesondere bei einer solchen Reaktion mit dem Sauerstoff aushärten. Dies gilt im extremen Maße für Schmelzkleber auf der Basis von Polyurethan, so daß die aus der DE-PS 36 00 020 bekannte Verflüssigungsvorrichtung entwickelt wurde, bei der ein nach unten offener Transportbehälter in dem oberen Teil eines beheizbaren, abgedichteten Vorratsbehälters angeordnet wird; unter dem Transportbehälter befindet sich der untere, als Puffervolumen dienende Teil des Vorratsbehälters, so daß während der gesamten Verflüssigung des hochpolymeren, in dem Transportbehälter befindlichen Werkstoffes eine Abschirmung gegen die Umbungseinflüsse durch den Vorratsbehälter und gegebenenfalls noch durch zusätzliche Einführung eines Schutzgases erfolgt.

Weitere, spezielle Ausgestaltungen der Verflüssigungsvorrichtung nach der DE-PS 36 00 020 werden in der deutschen Patentanmeldung 36 36 124 und der deutschen Patentanmeldung 37 02 160 beschrieben.

Bei einer solchen Verflüssigungsvorrichtung ist der Vorratsbehälter so ausgelegt, daß der gesamte Inhalt des Transportbehälters in dem unteren, als Puffervolumen dienenden Teil des Vorratsbehälters aufgenommen wird und der Transportbehälter nach seiner Entleerung ausgetauscht wird. Hierbei kann es jedoch zu einem Kontakt mit der Umgebungsatmosphäre und damit zu einer Sauerstoff-Reaktion kommen. Außerdem ist für viele Anwendungsfälle die vollständige Abschirmung des verflüssigten, hochpolymeren Werkstoffes und damit seines Transportbehälters in einem abgedichteten Vorratsbehälter, eventuell noch unter einer Schutzgashaube nicht erforderlich, so daß diese Lösung zu aufwendig wird.

Während bei diesen Verflüssigungsvorrichtungen der gesamte Transportbehälter gleichmäßig erwärmt und dadurch die gesamte, in dem Transportbehälter befindliche Menge an hochpolymerem Werkstoff nahezu gleichzeitig verflüssigt wird, gibt es auch Ausführungsformen, bei denen der Transportbehälter langsam von unten her erwärmt und gleichzeitig der verflüssigte Werkstoff mittels eines sogenannten "Kratzkolbens" von oben her aus dem Transportbehälter herausgedrückt wird und nach unten in eine beheizte Kammer fällt, von der er mittels einer Fördereinrichtung der weiteren Verarbeitung zugeführt wird.

Sowohl bei einer solchen Verflüssigungsvorrichtung als auch bei den erläuterten "Faßschmelzern" treten jedoch Probleme beim Wechseln des Transportbehälters auf, da hierbei die weitere Verarbeitung des verflüssigten, hochpolymeren Werkstoffes zumindest kurzzeitig unterbrochen werden muß. Dadurch kommt es jedoch zu starken, unerwünschten Qualitätsschwankungen im Verlaufe der weiteren Verarbeitung; als Beispiel soll das Auftragen eines verflüssigten Schmelzklebers auf eine textile Unterlage genannt werden: Wird hierbei der Auftrag unterbrochen und nach dem Auswechseln des Transportbehälters neu begonnen, so ergibt sich entweder eine Lücke auf der im allgemeinen kontinuierlichen Auftragsstrecke oder aber es muß gleichzeitig auch der Transport des zu beschichtenden Substrates an der Auftragsvorrichtung vorbei unterbrochen werden, d. h. praktisch die gesamte Anlage muß stillgesetzt werden.

Der Erfindung liegt deshalb die Aufgabe zugrunde, eine Verflüssigungsvorrichtung der angegebenen Gattung zu schaffen, bei der die oben erwähnten Nachteile nicht auftreten.

Insbesondere soll eine Verflüssigungsvorrichtung vorgeschlagen werden, die auch ohne die Verwendung eines abgedichteten Vorratsbehälters für den hochpolymeren Werkstoff die kontinuierliche Belieferung mit verflüssigtem, hochpolymerem Werkstoff einerseits und die sorgfältige Abschirmung des empfindlichen, verflüssigten, hochpolymeren Werkstoffes gegen die Umgebungsatmosphäre andererseits gewährleistet.

Dies wird erfindungsgemäß durch die im kennzeichnenden Teil des Anspruchs 1 angegebenen Merkmale erreicht.

Zweckmäßige Ausführungsformen werden durch die Merkmale der Unteransprüche definiert.

Die mit der Erfindung erzielten Vorteile beruhen auf der räumlichen und "physikalischen" Trennung zwischen dem Vorschmelzbereich und einem Pufferbehälter; dabei muß dafür gesorgt werden, daß in dem Vorschmelzbereich der verflüssigte, hochpolymere Werkstoff nicht in direktem Kontakt mit der Umgebungsluft kommen kann. Dies läßt sich beispielsweise durch Verwendung eines Faßschmelzers erreichen, der den thermoplastischen Werkstoff in seinem Transportbehälter erwärmt und gleichzeitig gegen die Umgebungsluft abschirmt. Der erwärmte und damit verflüssigte thermoplastische Werkstoff wird aus dem Vorratsbehälter abgezogen und - immer noch unter Luftabschluß - einem Speicher- und Dosierbehälter zugeführt.

In diesem Speicher- und Dosierbehälter befindet sich immer eine ausreichende Menge an verflüssigtem Werkstoff, die auch dann für die Beschickung der angeschlossenen Auftragsvorrichtung, beispielsweise einer Sprühvorrichtung, ausreicht, wenn ein Transportbehälter vollständig entleert worden ist und gegen einen neuen, gefüllten Transportbehälter ausgetauscht werden muß.

Auf der Oberfläche des verflüssigten, thermoplastischen Werkstoffes in dem Speicher- und Dosierbehälter schwimmt eine Schutzschicht aus einem fluiden Sperrmedium, das die Oberfläche des verflüssigten, thermoplastischen Werkstoffes gegen die Umgebungsluft abschirmt und weder mit den Bestandteilen der Luft einerseits noch mit dem verflüssigten thermoplastischen Werkstoff andererseits reagieren kann.

Bei Verwendung einer Schutzschicht ausreichender Dicke muß der Speicher- und Dosierbehälter nicht einmal vollständig verschlossen sein, da durch das fluide Sperrmedium jeder direkte Kontakt zwischen der Umgebungsluft und dem verflüssigten, thermoplastischen Werkstoff ausgeschlossen wird.

Um die Schutzschicht nicht zu verletzen, wird der verflüssigte, thermoplastische Werkstoff von dem Vorratsbehälter dem Speicher- und Dosierbehälter an einer Stelle zugeführt, die sich in ausreichendem Abstand unter der (freien) Oberfläche des verflüssigten, thermoplastischen Werkstoffes in diesem Behälter befindet; an einer entsprechenden, weit unter der (freien) Oberfläche angeordneten Stelle wird der verflüssigte, thermoplastische Werkstoff mittels einer Pumpe aus dem Speicher- und Dosierbehälter abgezogen und der weiteren Verarbeitung zugeführt, beispielsweise einer Auftragsvorrichtung oder einer Sprühvorrichtung.

Wenn bspw. aus konstruktiven Gründen keine Möglichkeit besteht, die Zuleitung an die Seitenwand des Speicher- und Dosierbehälters unter der (freien) Oberfläche des verflüssigten, thermoplastischen Werkstoffes anzuschließen, so kann die Zuleitung auch durch die Schutzschicht aus dem fluiden Sperrmedium geführt werden; hier muß jedoch gewährleistet sein, daß sich die Öffnung der Zuleitung in einem ausreichenden Abstand unter der Oberfläche des verflüssigten, thermoplastischen Werkstoffes befinden muß.

Neben dem erwähnten Faßschmelzer kommen noch andere Anordnungen als Vorschmelzbereich in Frage, beispielsweise eine Ausführungsform, bei der der Transportbehälter langsam von unten her erwärmt und gleichzeitig der verflüssigte Werkstoff in dem Transportbehälter mittels eines sogenannten "Kratzkolbens" von oben her aus dem Transportbehälter herausgedrückt und dem Speicher- und Dosierbehälter zugeführt wird.

Als fluides Sperrmedium können beispielsweise sogenannte "schwere Schutzgase" verwendet werden, wie sie für die Abschirmung von lichtempfindlichen Photo-Chemikalien eingesetzt werden. Hier kommen wiederum nur sauerstofffreie Gase in Frage.

Nach einer bevorzugten Ausführungsform werden jedoch flüssige Sperrmedien verwendet, insbesondere relativ schwere organische Flüssigkeiten, die als geschlossene Schicht auf der freien Oberfläche des verflüssigten, thermoplastischen Werkstoffes schwimmen und sie gegen die Umgebungsluft abschirmen. Besonders geeignete Materialien sind Vaseline oder ähnliche neutrale Öle und Fette.

Um die Schutzwirkung noch weiter zu verbessern, kann über der Schutzschicht aus dem fluiden Sperrmedium noch ein inertes Gas eingeleitet werden, insbesondere Stickstoff, das die Oberfläche der Schutzschicht überspült und eine weitere Abschirmung bildet.

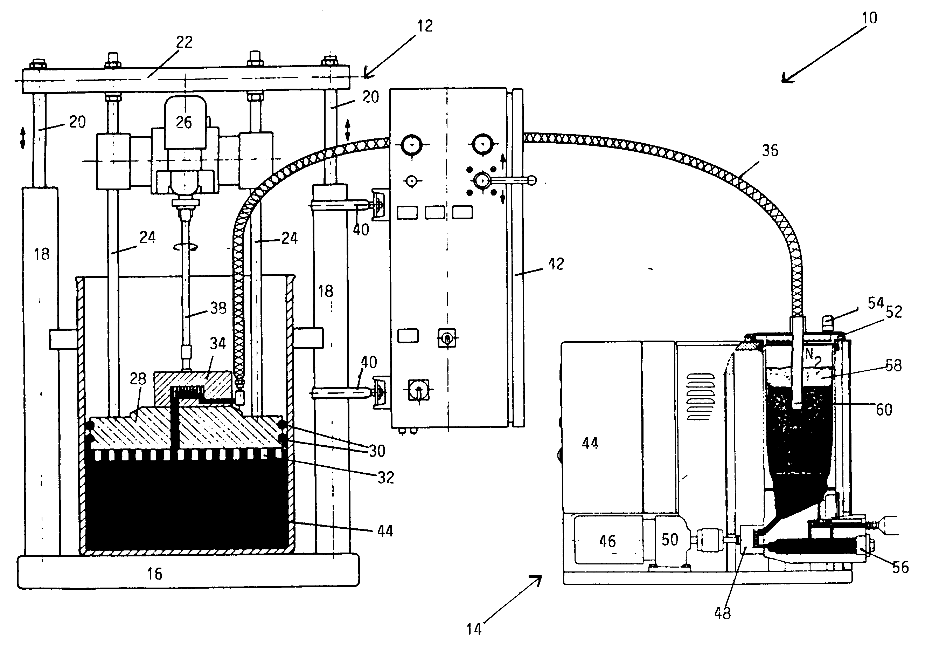

Die Erfindung wird im folgenden anhand eines Ausführungsbeispiels unter Bezugnahme auf die beiliegende, schematische Zeichnung näher erläutert, deren einzige Figur einen Schnitt durch ein System mit einem üblichen Faßschmelzer und einem Speicher- und Dosierbehälter zeigt.

Die aus der Figur ersichtliche und allgemein durch das Bezugszeichen 10 angedeutete Vorrichtung zum Verflüssigen eines Schmelzklebers auf der Basis von Polyurethan oder einer anderen, in Verbindung mit der Atmosphäre reagierenden Formulierung weist zwei getrennte Einheiten auf, die nach einer bevorzugten Ausführungsform horizontal nebeneinander angeordnet werden, nämlich einen herkömmlichen Faßschmelzer 12, neben dem sich ein Speicher- und Dosierbehälter 14 befindet.

Der Faßschmelzer 12 hat eine Basisplatte 16 mit zwei lotrechten, hohlen Säulen 18, in denen Kolben 20 in vertikaler Richtung verschiebbar angeordnet sind, wie in der Figur durch die Doppelpfeile angedeutet sind.

An ihrem oberen Ende tragen die Kolben 20 einen ebenfalls in vertikaler Richtung hin- und herbewegbaren Querträger 22, von dem zwei Stangen 24 senkrecht nach unten ragen. Diese Stangen 24 tragen kurz unterhalb des Querträgers 22 einen Elektromotor 26 und an ihren unteren Enden eine Schmelzplatte 28, die an ihren Seitenrändern mit Runddichtungen 30 versehen ist. Die nach unten gerichtete, große Oberfläche der Schmelzplatte 28 weist einen Schmelzrost 32 auf.

In der Schmelzplatte befinden sich Heizelemente, bspw. Widerstands-Heizelemente, die die Schmelzplatte 28 und damit den Schmelzrost 32 erwärmen.

In der Schmelzplatte 28 ist ein durchgehender, lotrecht nach oben verlaufender Durchlaß ausgebildet, der über einen Durchlaß in einem blockförmigen Aufsatz 34 der Schmelzplatte 28 an eine flexible Leitung 36 angeschlossen ist.

Von dem Elektromotor 26 ragt eine in Pfeilrichtung drehbare Antriebswelle 38 für eine in den Block 34 integrierte Förderpumpe nach unten. Dabei handelt es sich zweckmäßigerweise um eine Zahnradpumpe, wie es in der Figur schematisch angedeutet ist.

An der gemäß der Darstellung in der Figur rechten Säule 18 ist über horizontale Stützen 40 ein Schaltschrank 42 befestigt, der die Kontroll- und Bedienungselemente sowie Anzeigegeräte enthält.

Auf der Basisplatte 16 liegt ein Transportbehälter 44 mit im kalten Zustand zäh-fließendem, in aller Regel sogar festem Schmelzkleber auf der Basis von Polyurethan oder einer anderen, in Verbindung mit der Atmosphäre reagierenden Formulierung auf. Der Inhalt des Transportbehälters 44 ist in der Figur durch die dunkle Fläche angedeutet.

Die Leitung 36 ist an den Speicher- und Dosierbehälter 14 angeschlossen, der einen eigenen Schaltschrank 44 mit einem Elektromotor 46 für eine Förderpumpe 48, in aller Regel ebenfalls eine Zahnradpumpe, aufweist, die über eine Kupplung und/oder ein Getriebe 50 mit dem Elektromotor 46 verbunden ist.

Der Speicher- und Dosierbehälter 14 ist an seinem oberen Ende durch einen Deckel 52 mit einem Überdruckventil 54 verschlossen und weist eine abgeschlossene, über Heizelemente in den Wänden beheizbare Kammer mit einem Auslaß 56 am Boden der Kammer auf, aus dem der verflüssigte Schmelzkleber mittels der Pumpe 48 ausgegeben wird.

Wie man der Figur entnehmen kann, wird in die nach oben gerichtete Öffnung des Transportbehälters 44 die Schmelzplatte 28 eingeführt, wobei die Dichtungen 30 an der Innenwand des Transportbehälters 44 anliegen. Sobald der Schmelzrost 32 bzw. die Schmelzplatte 28 auf der Oberfläche des im kalten Zustand zäh-fließenden, in aller Regel sogar festen Schmelzklebers im Transportbehälter 45 aufliegt, ist die in dem Transportbehälter 44 vorhandene Luft nach oben entwichen, so daß die Dichtungen 30 den weiteren, direkten Kontakt des Schmelzklebers mit der Umgebungsatmosphäre verhindern.

Nun werden die Heizelemente in der Schmelzplatte 28 erregt, so daß sich die Schmelzplatte 28 erwärmt und damit sich der mit ihr in Kontakt kommende obere Teil des Schmelzklebers verflüssigt. Der verflüssigte Schmelzkleber wird mittels der Förderpumpe in dem Block 34 durch die Schmelzplatte 28 und dem Block 34 hindurch abgezogen und der Leitung 36 zugeführt, die sie zu dem Speicher- und Dosierbehälter 14 bringt.

Bei Abnahme des Füllstandes des Schmelzklebers in dem Transportbehälters 44 wird die Schmelzplatte 28 nach unten verschoben, bis der Transportbehälter 44 vollständig entleert worden ist.

In der Kammer des Speicher- und Dosierbehälters 14 sammelt sich der ebenfalls durch die dunkle Fläche angedeutete, verflüssigte Schmelzkleber, auf dessen freier Oberfläche eine Schutzschicht 58 aus einem fluiden Sperrmedium schwimmt, das weder mit dem empfindlichen verflüssigten Schmelzklebern noch mit der Luftatmosphäre reagiert. Neben schweren Schutzgasen kommen insbesondere flüssige organische Substanzen, nämlich Vaseline oder ähnliche neutrale Öle und Fette in Frage.

Um die Abschirmwirkung noch weiter zu verbessern, kann ein ebenfalls nicht reaktives inertes Gas, im allgemeinen Stickstoff ($N_2$), über die freie obere Oberfläche der Schutzschicht 58 geleitet werden.

Bei der dargestellten Ausführungsform erstreckt sich der Füllstutzen 60 der Leitung 36 durch den Deckel 52 in die Kammer des Speicher- und Dosierbehälters 14 und dann in den verflüssigten Schmelzkleber in der Kammer hinein, wobei sich die untere Auslaßöffnung des Füllstutzens 60 in einem ausreichenden Abstand unter der freien Oberfläche des verflüssigten Schmelzklebers befindet.

Als Alternative hierzu ist es auch möglich, den Füllstutzen durch die Seitenwand in die Kammer zu führen; die Voraussetzung hierbei ist ebenfalls, daß ein ausreichender Abstand zur freien Oberfläche des verflüssigten Schmelzklebers gewahrt bleibt.

Aus der Kammer wird der verflüssigte Schmelzkleber mittels der Pumpe 48 dem Ausgang 56 zugeführt.

Obwohl in der Figur eine Ausführungsform einer Vorschmelzeinrichtung dargestellt ist, die als üblicher Faßschmelzer ausgebildet ist, können auch andere Ausführungsformen verwenden werden. Es muß nur gewährleistet sein, daß der empfindliche Schmelzkleber bei der Verflüssigung nicht in direkten Kontakt mit der Umgebungsluft kommen kann, wie es bei einem Faßschmelzer, insbesondere auch durch die Dichtungen 30 an der Schmelzplatte 28, gewährleistet ist. Es besteht bspw. die Möglichkeit, innerhalb eines abgeschlossenen Gehäuses den Schmelzkleber mittels eines sogenannten "Kratzkolbens" aus dem Transportbehälter 44 herauszudrucken und dem Speicher- und Dosierbehälter 14 zuzuführen.

In letzter Zeit werden die bisher üblichen Transportbehälter für solche Schmelzkleber in zunehmendem Maße durch massive, feste Schmelzkleber-Blöcke ersetzt, die gegebenenfalls in eine Folie eingeschweißt werden. Auch solche Schmelzkleber-Blöcke lassen sich problemlos verarbeiten, indem zunächst die Folie abgezogen, dann der Schmelzkleber-Block in eine geschlossene Vorschmelzeinrichtung eingelegt, unter Luftabschluß erwärmt und damit verflüssigt wird, so daß der verflüssigte Schmelzkleber über die Leitung 36 dem Speicher- und Dosierbehälter 14 zugeführt werden kann.

Das Volumen des Speicher- und Dosierbehälters 14 sollte so groß sein, daß auch bei einem Austausch des Transportbehälters 44 eine ausreichende Menge an verflüssigtem Schmelzkleber zur Verfügung steht, um den kontinuierlichen Betrieb zu gewährleisten.

## Patentansprüche

1. Vorrichtung zum Verflüssigen eines hochpolymeren, thermoplastischen Werkstoffes, insbesondere eines Schmelzklebers auf der Basis von Polyurethan,
   a) mit einer Vorschmelzeinrichtung für den thermoplastischen Werkstoff, und
   b) mit einem mit der Vorschmelzeinrichtung verbundenen Speicher- und Dosierbehälter, **gekennzeichnet durch die** folgenden Merkmale:
   c) auf der Oberfläche des verflüssigten, thermoplastischen Werkstoffes in dem Speicher- und Dosierbehälter (14) schwimmt eine Schutzschicht (58) aus einem fluiden Sperrmedium, das weder mit der Umgebungsluft noch mit dem verflüssigten, thermoplastischen Werkstoff reagiert; und
   d) eine Leitung (36) führt dem Speicher- und Dosierbehälter (14) an einer Stelle, die unter dem Flüssigkeitsspiegel des verflüssigten thermoplastischen Werkstoffes in dem Speicher- und Dosierbehälter (14) liegt, den verflüssigten, thermoplastischen Werkstoff von der abgeschlossenen Vorschmelzeinrichtung (12) zu.

2. Vorrichtung nach Anspruch 1, dadurch gekennzeichnet, daß als fluides Sperrmedium ein schweres Schutzgas verwendet wird.

3. Vorrichtung nach Anspruch 1, dadurch gekennzeichnet, daß als fluides Sperrmedium eine organische Flüssigkeit verwendet wird.

4. Vorrichtung nach Anspruch 3, dadurch gekennzeichnet, daß als organische Flüssigkeiten Vaseline oder ähnliche neutrale Öle und Fette eingesetzt werden.

5. Vorrichtung nach einem der Ansprüche 1 bis 4, dadurch gekennzeichnet, daß dem Speicher- und Dosierbehälter (14) der verflüssigte, thermoplastische Werkstoff an einer Stelle entnommen wird, die unter dem Flüssigkeitsspiegel in dem Speicher- und Dosierbehälter (14) liegt.

6. Vorrichtung nach einem der Ansprüche 1 bis 5, dadurch gekennzeichnet, daß als Vorschmelzeinrichtung ein Faßschmelzer (12) vorgesehen ist, dessen Schmelzplatte (28) den verflüssigen, hochpolymeren Werkstoff durch Dichtungen (30) gegen die Umgebungsluft abschirmt.

7. Vorrichtung nach Anspruch 6, dadurch gekennzeichnet, daß an die Schmelzplatte (28) des Faßschmelzers (12) eine die Leitung (36) beschickende Förderpumpe angeschlossen ist.

8. Vorrichtung nach einem der Ansprüche 1 bis 7, dadurch gekennzeichnet, daß die Vorschmelzeinrichtung den thermoplastischen Werkstoff mittels eines "Kratzkolbens" aus dem Transportbehälter (26) herausdrückt.

9. Vorrichtung nach einem der Ansprüche 1 bis 8, dadurch gekennzeichnet, daß die Vorschmelzeinrichtung einen Block aus dem thermoplastischen, hochpolymeren Werkstoff erwärmt, verflüssigt und der Leitung (36) zuführt.

10. Vorrichtung nach einem der Ansprüche 1 bis 9, dadurch gekennzeichnet, daß sich ein Füllstutzen (60) der Leitung (36) von oben durch die Schutzschicht (58) erstreckt und an einer Stelle in dem verflüssigten, hochpolymeren Werkstoff endet, die im ausreichenden Abstand unter der freien Oberfläche des verflüssigten, thermoplastischen Werkstoffes in dem Speicher- und Dosierbehälter (14) liegt.

11. Vorrichtung nach einem der Ansprüche 1 bis 9, dadurch gekennzeichnet, daß sich der Füllstutzen (60) der Leitung (36) durch die Seitenwand in den verflüssigten Schmelzkleber in dem Speicher- und Dosierbehälter (14) erstreckt.

## Claims

1. An apparatus for liquefying a high-polymeric thermoplastic material, in particular a hot-melt adhesive on the basis of polyurethane, comprising

a) a premelt means for the thermoplastic material, and

b) a storage and metering container connected to the premelt means,

**characterized by** the following features:

c) a protective layer (58) of a fluid-barrier medium which does not react either with the ambient air or with the liquefied thermoplastic material floats on the surface of the liquefied thermoplastic material in the storage and metering container (14); and

d) a conduit (36) conducts the liquefied thermoplastic material from the sealed premelt means (12) to the storage and metering container (14) at a point which lies beneath the liquid level of the liquefied thermoplastic material in the storage and metering container (14).

2. An apparatus according to claim 1, **characterized in** that as the fluid-barrier medium a heavy protective gas is used.

3. An apparatus according to claim 1, **characterized in** that as fluid-barrier medium an organic liquid is used.

4. An apparatus according to claim 3, **characterized in** that as organic liquids vaselines or similar neutral oils and fats are used.

5. An apparatus according to one of the claims 1 to 4, **characterized in** that the liquefied thermoplastic material is withdrawn from the storage and metering container (14) at a point which lies beneath the liquid level in the storage and metering container (14).

6. An apparatus according to one of the claims 1 to 5, **characterized in** that as premelt means a drum melter (12) is provided having a melt plate (28) which shields the liquefied high-polymeric material from the ambient air by seals (30).

7. An apparatus according to claim 6, **characterized in** that a conveying pump supplying the conduit (36) is connected to the melt plate (28) of the drum melter (12).

8. An apparatus according to one of the claims 1 to 7, **characterized in** that the premelt means discharges under pressure the thermoplastic material from the transport container (26) by means of a "scraper piston".

9. An apparatus according to one of the claims 1 to 8, **characterized in** that the pre-melt means heats a block of the thermoplastic high-polymeric material, liquefies said block and supplies the material to the conduit (36).

10. An apparatus according to one of the claims 1 to 9, **characterized in** that a filling pipe (60) of the conduit (36) extends from above through the protective layer (58) and terminates at a point in the liquefied high-polymeric material which lies at an adequate distance beneath the free surface of the liquefied thermoplastic material in the storage and metering container (14).

11. An apparatus according to one of the claims 1 to 9, **characertized in** that the filling pipe (60) of the conduit (36) extends through the side wall into the liquefied hot-melt adhesive in the storage and metering container (14).

**Revendications**

1. Dispositif de liquéfaction d'une matière thermoplastique haut-polymère, en particulier une colle fusible (hot melt) à base de polyuréthane, comprenant

a) un dispositif de préfusion de la matière thermoplastique et

b) un récipient de stockage et de dosage raccordé au dispositif de préfusion,

caractérisé par les éléments caractéristiques suivants :

c) une couche protectrice (58) constituée par un milieu de barrage fluide qui ne réagit ni avec l'air ambiant ni avec la matière thermoplastique liquéfiée flotte à la surface de la matière thermoplastique liquéfiée contenue dans le récipient de stockage et de dosage (14),

d) une canalisation (36) conduit la matière thermoplastique liquéfiée du dispositif de préfusion (12) scellé au récipient de stockage et de dosage (14) à un endroit localisé sous le niveau de liquide de la matière thermoplastique liquéfiée contenue dans le récipient de stockage et de dosage (14).

2. Dispositif suivant la revendication 1, caractérisé en ce qu'un gaz protecteur lourd est mis en oeuvre en tant que milieu de barrage fluide.

3. Dispositif suivant la revendication 1, caractérisé en ce qu'un liquide organique est mis en oeuvre en tant que milieu de barrage fluide.

4. Dispositif suivant la revendication 3, caractérisé en ce que de la vaseline ou des huiles et des graisses neutres similaires sont mises en oeuvre en tant que liquides organiques.

5. Dispositif suivant l'une des revendications 1 à 4, caractérisé en ce que la matière thermoplastique liquéfiée est prélevée du récipient de stockage et de dosage (14) à un endroit localisé sous le niveau de liquide dans le récipient de stockage et de dosage (14).

6. Dispositif suivant l'une des revendications 1 à 5, caractérisé en ce qu'un appareil de fusion en cuve (12) dont la plaque de fusion (28) protège la matière haut-polymère liquéfiée de l'air ambiant par des joints (30) est prévu en tant que dispositif de préfusion.

7. Dispositif suivant la revendication 6, caractérisé en ce qu'une pompe de circulation qui alimente la canalisation (36) est raccordée à la plaque de fusion (28) de l'appareil de fusion en cuve (12).

8. Dispositif suivant l'une des revendications 1 à 7, caractérisé en ce que le dispositif de préfusion extrait la matière thermoplastique du récipient de transport (26) à l'aide d'un "piston racleur".

9. Dispositif suivant l'une des revendications 1 à 8, caractérisé en ce que le dispositif de préfusion chauffe et liquéfie un bloc de matière thermoplastique haut-polymère et la fournit à la canalisation (36).

10. Dispositif suivant l'une des revendications 1 à 9, caractérisé en ce qu'une tubulure de remplissage (60) de la canalisation (36) s'étend par le haut à travers la couche protectrice (58) et se termine à un endroit dans la matière haut-polymère liquéfiée localisé à une distance suffisante sous la surface libre de la matière thermoplastique liquéfiée contenue dans le récipient de stockage et de dosage (14).

11. Dispositif suivant l'une des revendications 1 à 9, caractérisé en ce que la tubulure de remplissage (60) de la canalisation (36) s'étend à travers la paroi latérale dans la colle fusible (hot melt) liquéfiée contenue dans le récipient de stockage et de dosage (14).